# EUROPÄISCHE PATENTANMELDUNG

(11) **EP 1 199 149 A1**
(43) Veröffentlichungstag der Anmeldung: **24.04.2002**
(21) Anmeldenummer: 01120169.6
(22) Anmeldetag: 22.08.2001
(51) Int. Cl.: B29C 55/04

(54) **Vorrichtung zur Durchführung eines Verfahren zur Herstellung von Platten aus in Dickenrichtung verstreckten Thermoplasten**

(30) Priorität: 18.10.2000 DE 10051629
(71) Anmelder: Blizzard Holding GmbH, 5730 Mittersill (AT)
(72) Erfinder: Viehhauser, Christian, Dipl.-Ing., 5700 Zell am See (AT)
(74) Vertreter: Rassmann, Christian

(57) **Zusammenfassung**

Die Erfindung betrifft eine Vorrichtung zur Durchführung eines Verfahrens zur Herstellung von Platten aus in Dickenrichtung verstreckten Thermoplasten mit zwei Ziehwerkzeugen (6,7), zwischen die die zu verstreckenden Platten aus thermoplastischem Material einbringbar sind, wobei jedes Ziehwerkzeug eine Grundplatte (1) mit untereinander über Hinterlüftungskanäle verbundenen Hohlräume (11) und eine vollflächige Abdeckplatte (2) aufweisen. Erfindungsgemäß ist das Ziehwerkzeug einstückig ausgebildet.

## Beschreibung

Die Erfindung betrifft eine Vorrichtung zur Durchführung eines Verfahrens zur Herstellung von Platten aus in Dickenrichtung verstreckten Thermoplasten nach dem Oberbegriff des Anspruchs 1.

Es sind bereits Verfahren beschrieben worden, bei denen jeweils die für das Verstrecken der thermoplastischen Platten notwendigen Ziehwerkzeuge an der Unter-bzw. Oberseite einer heiz- und kühlbaren Ziehpresse angebracht sind. Diesbezüglich wird auf die folgenden Schriften verwiesen: US 4, 113, 909; US 4, 164, 389; US 4, 315, 051; US 4, 269, 586; US 4, 264, 293; US 4, 315, 050 und die deutsche Patentanmeldung 100 30 616.0. Die gemäß dieser Vefahren hergestellten thermoplastischen Platten werden zwischen den oberen und unteren, mit bestimmten Strukturen perforierten, Ziehwerkzeugen soweit erhitzt, daß Haftung zu den Ziehwerkzeugen erreicht wird und der Kunststoff beim nachfolgenden Ziehvorgang quer zur Dickenrichtung verstreckt werden kann.

Üblicherweise haben die am Pressenoberteil und - unterteil angebrachten Ziehwerkzeuge unterschiedlichste Perforierungen. Auf diese Weise haftet das thermoplastische Material an den nicht perforierten Bereichen dieser Formplatten, so daß dann beim nachfolgenden Trimmen der Formplatten von der verstreckten Platte in den Bereichen der Perforierungen Hohlräume auftreten.

Gemäß dem Stand der Technik werden als Ziehwerkzeuge zweiteilige Ziehwerkzeuge eingesetzt, bei denen die mit Hohlräumen und Hinterlüftungskanälen versehenen Werkzeugteile auf einer Seite mit einer vollflächigen Platte abgedeckt werden.

Derart gestaltete Ziehwerkzeuge haben den Nachteil, daß sie bei höheren Temperaturen während des Ziehprozesses zu einem Abscheren der Verbindungsschrauben oder - nieten bzw. zu einem Ablösen im Bereich einer entsprechenden Schweißnaht zwischen der eigentlichen Werkzeugplatte und der planen Abdeckung neigen. Das bedeutet, daß der gesamte Werkzeugverbund versagt und daß die Vorrichtung aufgrund einer aufwendigen Reparatur ausfällt.

Aufgabe der Erfindung ist es, die Standzeit der gattungsgemäßen Vorrichtung zur Durchführung eines Herstellverfahrens von Platten aus in Dickenrichtung verstreckten Thermoplasten zu verbessern.

Erfindungsgemäß wird diese Aufgabe durch eine Vorrichtung mit den Merkmalen gemäß Anspruch 1 gelöst. Die im Rahmen der gegenständlichen Erfindung beschriebenen Ziehwerkzeuge sind einstückig ausgebildet, bestehen also aus einem Teil. Durch eine spezielle Fräs- und Bohrtechnik sind die für den Ziehvorgang notwendigen Hohlräume und Hinterlüftungskanäle unter Bewahrung einer glatten Rückseite herstellbar. Derartige bevorzugte Ausführungsvarianten der Erfindung sind in den sich an den Hauptanspruch anschließenden Unteransprüchen beansprucht.

Weitere Einzelheiten und Vorteile der Erfindung werden anhand mehrerer in der Zeichnung dargestellter Ausführungsvarianten erläutert. Es zeigen:
- Figur 1:: einen Schnitt durch ein Ziehwerkzeug, wie es konventionell nach dem Stand der Technik aufgebaut ist,
- Figur 2:: einen Schnitt durch eine zwei Ziehwerkzeuge aufweisende Ziehanordnung, in dem die erfinderischen Details des Ziehwerkzeugs nicht im einzelnen dargestellt sind,
- Figur 3:: einen Schnitt durch eine erste erfindungsgemäße Ausführungsform eines Ziehwerkzeugs,
- Figur 4:: eine Draufsicht auf die Ausführungsform gemäß Figur 3,
- Figur 5, 5a:: jeweils Schnitte durch eine zweite bzw. dritte bevorzugte Ausführungsform eines Ziehwerkzeugs und
- Figur 6:: eine Draufsicht auf ein Ziehwerkzeug gemäß Figur 5.

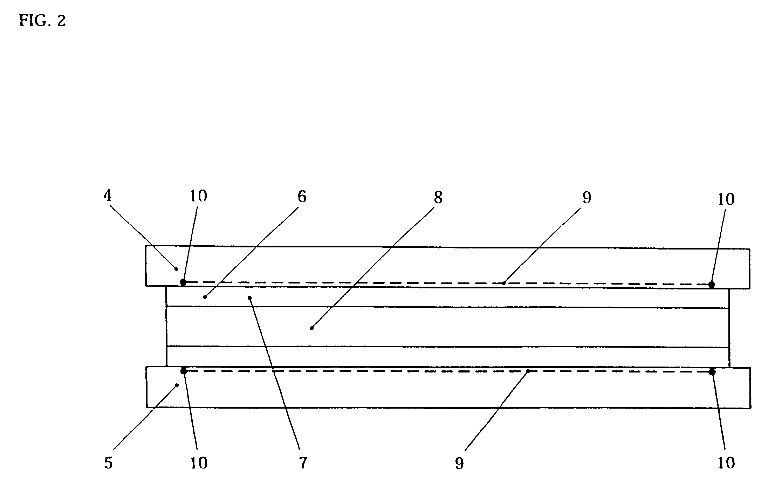

In Figur 2 ist eine Ziehanordnung einer Vorrichtung zur Durchführung eines Verfahrens zur Herstellung von Platten aus in Dickenrichtung verstreckten Thermoplasten dargestellt. Diese weist einen Pressenoberteil 4 und einen Pressenunterteil 5 auf, wobei an dem Pressenoberteil 4 ein oberes Ziehwerkzeug 6 und an dem Pressenunterteil 5 ein unteres Ziehwerkzeug 7 anschließen. Zwischen den Ziehwerkzeugen wird die zu verstreckende Platte 8 aus thermoplastischem Material eingelegt. Mit 9 sind in dem Pressenoberteil bzw Pressenunterteil vorgesehene Vakuumkanäle schematisch dargestellt. 10 bezeichnen schematisch Dichtlippen, mit denen die Vakuumkanäle gegenüber der Außenatmosphäre abgedichtet sind.

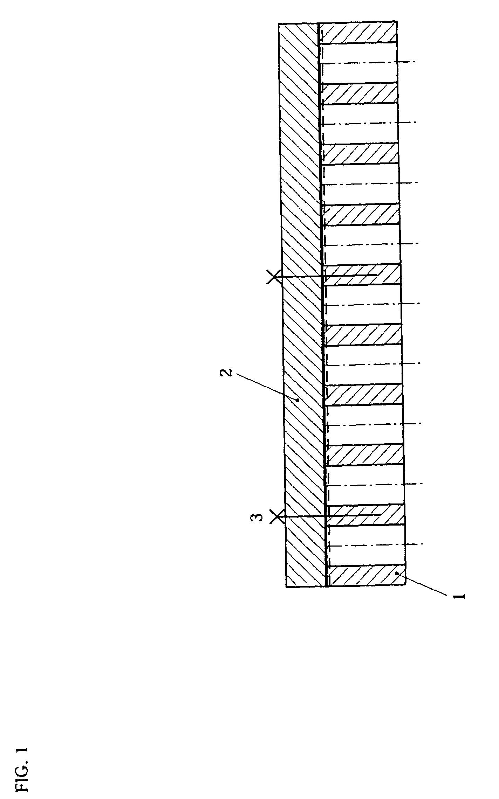

In Figur 1 sind Ziehwerkzeuge dargestellt, wie sie nach dem Stand der Technik in Ziehanordnungen, wie sie zuvor anhand der Figur 2 beschrieben worden, eingesetzt werden. Diese Ziehwerkzeuge nach dem Stand der Technik weisen eine für den Ziehvorgang notwendige mit Hohlräumen versehene Grundplatte 1 auf und eine darüberliegende vollflächige Abdeckplatte 2. Die mit den Hohlräumen versehene Grundplatte 1 und die darüber liegende vollflächige Abdeckplatte 2 sind über hier nur schematisch mit 3 bezeichnete Verbindungselemente miteinander verbunden. Derartige Verbindungselemente können beispielsweise Schrauben oder Nieten sein. Aufgrund der hohen thermischen und mechanischen Belastung während des Herstellvorganges der thermoplastisch verstreckten Platten können die mehrteiligen Ziehwerkzeuge durch Abscheren der entsprechenden Schrauben oder Nieten oder sonstigen Verbindungen leicht beschädigt werden.

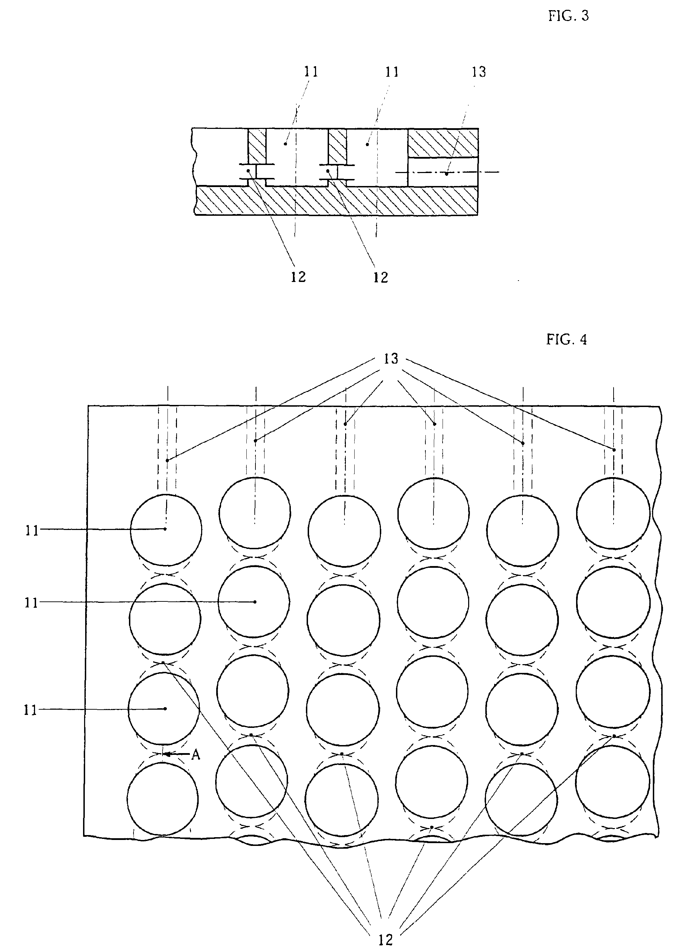

Eine erste Ausführungsvariante nach der erfindunsgemäßen Vorrichtung ist in den Figuren 3 und 4 dargestellt. Figur 3 zeigt einen Querschnitt durch ein Ziehwerkzeug mit einer Hohlkörperstruktur 11 und darunter liegenden Belüftungsschlitzen, die als Ausfräsungen 12 gebildet worden. Aus der Draufsicht gemäß Figur 4 ergibt sich die genaue Anordnung der vier kreisrunden Hohlkörper, die entlang parallel zueinander verlaufender Linien beabstanded voneinander angeordnet sind. Durch die entsprechenden Ausfräsungen 12, die sich zumindest entlang einer kleinen Kontaktfläche berühren, sind die Hinterlüftungskanäle gebildet. Im Randbereich sind die äußersten Hohlräume 11 über Belüftungsbohrungen 13 mit dem Vakuumsystem verbunden.

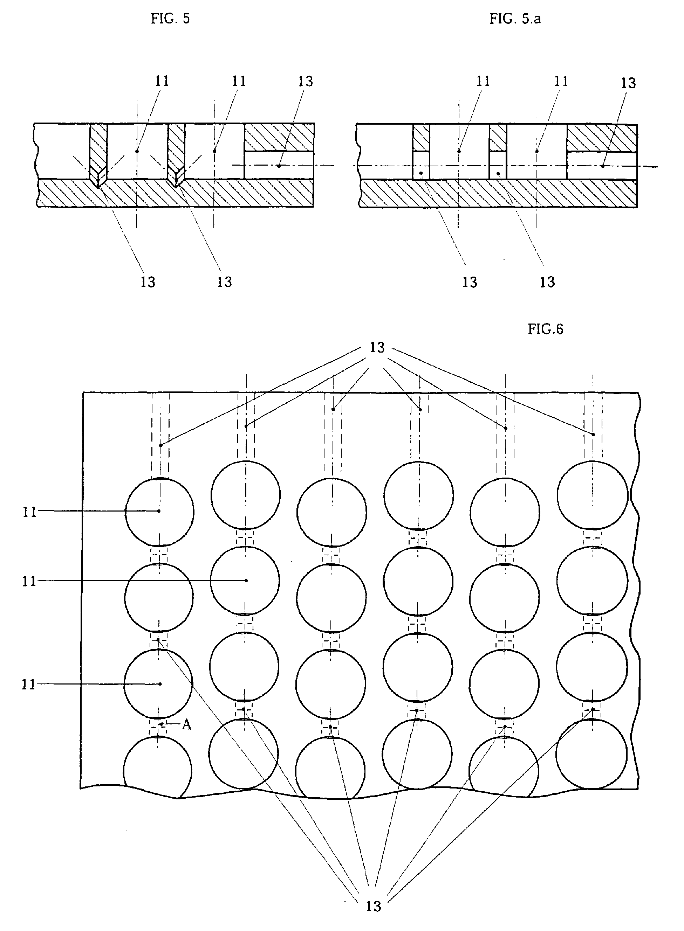

In den Figuren 5, 5a und 6 ist eine alternative Ausführungsvariante gezeigt. Hier zeigt die Figur 5 ebenfalls einen Querschnitt durch ein Ziehwerkzeug mit einer Hohlkörperstruktur 11, wobei die Hohlräume 11 hier allerdings nicht durch Ausfräsungen sondern durch zueinander schräg verlaufende Bohrungen 13 (Fig. 5) oder gerade verlaufende Bohrungen (Fig. 5a) gebildet ist. Die Lage der Bohrungen ist der Draufsicht gemäß Figur 6 im einzelnen zu entnehmen. Auch hier sind die Hohlräume 11 entlang parallel zueinander verlaufender Linien angeordnet. Im Randbereich sind die äußersten Hohlräume 11 über Bohrungen 13 mit dem hier nicht näher dargestellten Vakuumsystem verbunden.

Aufgrund der einstückigen Ausführungen der Ziehwerkzeuge kann die Standzeit der gesamten Ziehanordnung und somit der gesamten Herstellvorrichtung wesentlich verlängert werden.

## Patentansprüche

1. Vorrichtung zur Durchführung eines Verfahrens zur Herstellung von Platten aus in Dickenrichtung verstreckten Thermoplasten, mit zwei Ziehwerkzeugen, zwischen die die zu verstreckenden Platten aus thermoplastischem Material einbringbar sind, wobei jedes Ziehwerkzeug eine Grundplatte mit untereinander über Hinterlüftungskanäle verbundenen Hohlräumen und eine vollflächige Abdeckplatte aufweisen,
**dadurch gekennzeichnet,**
**daß** die Ziehwerkzeuge einstückig ausgebildet sind.

2. Vorrichtung nach Anspruch 1, **dadurch gekennzeichnet, daß** die Hohlräume aus bei Abstand voneinander angeordneten Ausnehmungen bestehen.

3. Vorrichtung nach Anspruch 1 oder 2, **dadurch gekennzeichnet, daß** die Ausnehmungen entlang parallel zueinander verlaufender Linien angeordnet sind.

4. Vorrichtung nach einem der Ansprüche 1 bis 3, **dadurch gekennzeichnet, daß** die Hinterlüftungskanäle aus Ausfräsungen und/oder Bohrungen bestehen.
